# EUROPEAN PATENT APPLICATION

(11) **EP 3 162 916 A1**
(43) Date of publication of application: **03.05.2017**
(21) Application number: 15811680.6
(22) Date of filing: 25.06.2015
(51) Int. Cl.: C23C 18/52, F01D 25/00, F01D 25/18, F02B 39/00, F16C 35/00, F16N 21/00, F16N 29/00

(54) **COATING FILM FOR SUPPRESSING ADHESION OF DEPOSITS, AND FLOW-PATH COMPONENT PROVIDED WITH SAID COATING FILM**

(30) Priority: 25.06.2014 JP 2014130268
(71) Applicant: IHI Corporation, Tokyo 135-8710 (JP)
(72) Inventor: YOKOYAMA, Fumihiko, Tokyo 135-8710 (JP); KATO, Yuka, Tokyo 135-8710 (JP)
(74) Representative: Lamb, Martin John Carstairs
(86) International application number: PCT/JP2015/068394
(87) International publication number: WO 2015/199189

(57) **Abstract**

A lubricating oil line of a gas turbine or a turbocharger includes a flow path component which allows passage of a lubricating oil. The flow path component used in the gas turbine includes a sump chamber (45) and a vent line (49). A surface of the flow path component, which is exposed to a temperature approximately from 300 to 450°C and comes into contact with the lubricating oil, is covered with a coating that includes nickel or a nickel-phosphorus alloy, and particles made of polytetrafluoroethylene.

## Description

### [Technical Field]

The present invention relates to a technique for suppressing adhesion of deposits derived from an oil such as a lubricating oil, or more specifically, to a coating to suppress adhesion of deposits developed in a temperature range from 300°C to 450°C inclusive, and a flow path component and the like which are provided with the coating and are to be used in a gas turbine or a turbocharger.

### [Background Art]

After machine equipment such as a reciprocating engine, a jet engine, a gas turbine, and a turbocharger to be exposed to a high temperature is used for a certain period of time, deposits derived from a fuel oil and a lubricating oil and adhering to the inside of the machine equipment are frequently observed. Such deposits may lead to damage on performances of the machine equipment. Accordingly, the adhesion of deposits as much as possible may be prevented or suppressed.

Such deposits have a distinctly different composition from that of the oil which causes the deposits. There are still many factors left unknown concerning a mechanism for causing such a difference. Nonetheless, regarding deposits to be developed in a turbine of a marine turbocharger at its regions reaching a relatively high temperature (about 650°C) such as blades and an inner surface of a housing thereof, a carbonization reaction that occurs on a surface of the machine is known as a factor. PTL 1 discloses a technique for suppressing adhesion of deposits to blades and an inner surface of a housing by use of a coating to suppress a carbonization reaction.

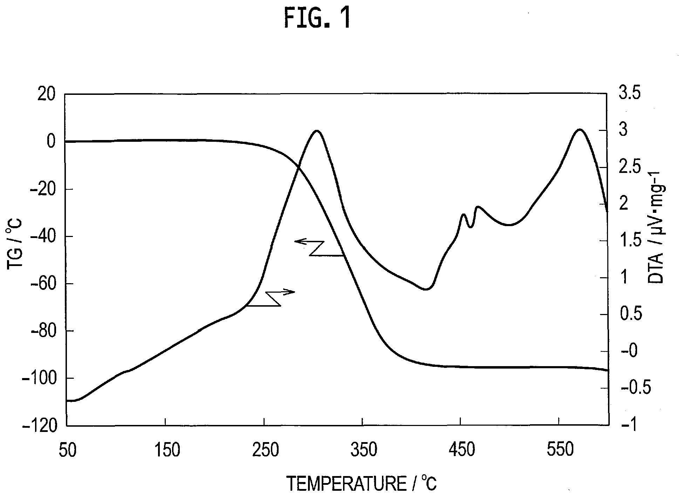

Meanwhile, it is reported in many documents that a reaction which is different from the above-mentioned reaction is dominant in the case of a lower temperature range. NPL 1 to NPL 3 represent examples of the documents. For instance, as a consequence of conducting a thermogravimetric analysis and a thermal differential analysis of a lubricating oil (results of measurements are reprinted in Fig. 1 of this specification), NPL 1 suggests that a different reaction occur depending on the temperature range. Focusing on this variance in reactions, NPL 1 categorizes the temperature ranges broadly into four ranges, namely, below 240°C, 240°C to 400°C, 400°C to 480°C, and equal to or above 480°C.

### [Citation List]

### [Patent Literature]

[PTL 1] International Publication WO2012/098807

### [Non Patent Literature]

[NPL 1] "Journal of Japanese Society of Tribologists", Vol. 50, No. 10 (2005), pp. 737-744
[NPL 2] "TRIBOLOGY TRANSACTIONS", Vol. 43, No. 4 (2000), pp. 823-829
[NPL 3] "Lubricant Evaluation and Systems Design for Aircraft Gas Turbine Engines", R. G. Edge and A. T. B. P. Squires, Society of Automotive Engineers
[NPL 4] "Journal of the Japan Institute of Marine Engineering", Vol. 45, No. 1 (2010), pp. 63-66

### [Summary of Invention]

### [Technical Problems]

A shaft of a gas turbine needs to be rotated at a high speed under a high temperature, and its bearings are exposed to an extremely harsh environment. In order not to cause an oil film shortage on each bearing, the gas turbine is usually equipped with a system for forcibly feeding and circulating a lubricating oil. In this system, the bearing is housed in a small chamber called a sump chamber located on a lubricating oil line. The bearing is sprayed with the lubricating oil in the sump chamber, thereby being lubricated. In the sump chamber and lines connected thereto, the temperature of the lubricating oil reaches about 350 to 400°C. The lubricating oil is turned into a mist and mixed with air. This is an extremely oxidative environment, which also involves high temperature. Hence, the lubricating oil is prone to change in quality, and deposits are likely to be developed in such a region as a consequence. Meanwhile, an environment similar to the above-mentioned one is also found in a turbocharger, such as in a lubricating oil line to feed a lubricating oil for lubricating a bearing to support a shaft.

So far as observed by the inventors of the present invention, deposits found in a flow path component that allows passage of the lubricating oil in the lubricating oil line of the gas turbine or the turbocharger are semisolid and have the nature of adhering to an inner surface of the flow path component in the lubricating oil line. The semisolid deposits typically include an oil content contained in the lubricating oil such as an engine oil, an oxide (an oxygen-containing high-molecular compound, or sludge) developed by oxidation of the oil content, a carbide developed by carbonization of the oil content, and an inorganic residue composed of a metal compound derived from an additive contained in the lubricating oil. Note that the semisolid deposits may not include any one of the oxide, the carbide, and the inorganic residue.

In contrast, deposits found in blades and an inner surface of a housing in a turbine of a marine turbocharger contain an ash content, and are therefore quite hard and have the nature of being fixed to surfaces thereof like a coating. These deposits are apparently different from each other, and this difference is thought to be based on the difference in reaction mechanism as mentioned previously. Because of this difference, suppression of the deposits that adhere to the flow path component of the lubricating oil line in the gas turbine or the turbocharger cannot be expected from the coating for the turbine of the marine turbocharger. Hence there is a demand for a coating that effectively suppresses adhesion of deposits to the flow path component and the like in the lubricating oil line of the gas turbine or the turbocharger at a medium-high temperature such as a high temperature in a range approximately from 300 to 450°C.

### [Solution to Problem]

The inventors of the present invention have arrived at the fact that a coating including any of nickel and a nickel-phosphorus alloy, as well as particles made of polytetrafluoroethylene (PTFE) suppresses development of deposits in the range approximately from 300 to 450°C.

According to an aspect, the coating used for a device to suppress the development of deposits in the range approximately from 300 to 450°C covers a surface of the device and includes any of nickel and a nickel-phosphorus alloy, and particles made of polytetrafluoroethylene.

The coating according to the present invention covers the surface, which comes into contact with the lubricating oil, of the device exposed to the lubricating oil in the range approximately from 300 to 450 °C, and includes any of nickel and the nickel-phosphorus alloy, as well as the particles made of the polytetrafluoroethylene.

The coating according to the present invention may include the particles made of polytetrafluoroethylene at a volume ratio in the coating larger than 0% by volume and equal to or smaller than 40% by volume, and any of the nickel and the nickel-phosphorus alloy for the rest.

The coating according to the present invention may include the particles made of polytetrafluoroethylene at a volume ratio in the coating equal to or larger than 10% by volume and equal to or smaller than 40% by volume, and any of the nickel and the nickel-phosphorus alloy for the rest.

The coating according to the present invention may include the particles made of polytetrafluoroethylene at a volume ratio in the coating equal to or larger than 30% by volume and equal to or smaller than 35% by volume, and any of the nickel and the nickel-phosphorus alloy for the rest.

According to another aspect, a lubricating oil line of any of a gas turbine and a turbocharger includes a flow path component which allows passage of the lubricating oil, and a coating which covers an inner surface of the flow path component, and includes any of nickel and a nickel-phosphorus alloy, as well as particles made of polytetrafluoroethylene.

A flow path component with a coating according to the present invention includes a flow path component to be used in any of a gas turbine and a turbocharger, and to allow passage of a lubricating oil, and a coating to cover a surface of the flow path component, the surface being exposed to and coming into contact with the lubricating oil in a range approximately from 300 to 450°C, the coating including any of nickel and a nickel-phosphorus alloy, and particles made of polytetrafluoroethylene.

In the flow path component with a coating according to the present invention, the coating may include the particles made of polytetrafluoroethylene at a volume ratio in the coating larger than 0% by volume and equal to or smaller than 40% by volume, and any of nickel and the nickel-phosphorus alloy for the rest.

In the flow path component with a coating according to the present invention, the coating may include the particles made of polytetrafluoroethylene at a volume ratio in the coating equal to or larger than 10% by volume and equal to or smaller than 40% by volume, and any of the nickel and the nickel-phosphorus alloy for the rest.

In the flow path component with a coating according to the present invention, the coating may include the particles made of polytetrafluoroethylene at a volume ratio in the coating equal to or larger than 30% by volume and equal to or smaller than 35% by volume, and any of the nickel and the nickel-phosphorus alloy for the rest.

In the flow path component with a coating according to the present invention, the flow path component may be at least one selected from the group consisting of a sump chamber used in the gas turbine and configured to lubricate a bearing with the lubricating oil, and a vent line connected to the sump chamber and configured to release the lubricate oil.

In the flow path component with a coating according to the present invention, the flow path component may include a sump chamber used in the gas turbine and configured to lubricate a bearing with the lubricating oil, and a vent line connected to the sump chamber and configured to release the lubricate oil, and the coating may cover only the surface of each of the sump chamber and the vent line.

In the flow path component with a coating according to the present invention, the flow path component may be a bearing housing used in the turbocharger and including an oil supply path to supply the lubricating oil to a bearing, and the coating may cover the surface of the oil supply path.

Deposits derived from a lubricating oil in a range approximately from 300 to 450°C are inhibited from being developed in a device such as a flow path component to allow passage of the lubricating oil in a gas turbine or a turbocharger, or are prevented from adhering thereto.

### [Brief Description of Drawings]

[Fig. 1] Fig. 1 shows an example of results of measuring the process of a rise in temperature of a lubricating oil by using a differential thermal balance.
[Fig. 2] Fig. 2 is a partial cross-sectional view of a gas turbine engine based on an example in an embodiment of the present invention.
[Fig. 3] Fig. 3 is a partially enlarged cross-sectional view which shows an enlarged part of a sump chamber and of a vent line in the gas turbine engine in the embodiment of the present invention.
[Fig. 4] Fig. 4 is a block diagram schematically showing a lubricating oil circulation system in the embodiment of the present invention.
[Fig. 5] Fig. 5 is a conceptual diagram of a test apparatus for a panel coking test in the embodiment of the present invention.
[Fig. 6] Fig. 6 shows an example of results of the panel coking tests in the embodiment of the present invention, in which a test piece without a coating is compared with examples of the embodiment.
[Fig. 7] Fig. 7 shows another example of results of the panel coking tests in the embodiment of the present invention, in which an aluminum test piece without a coating is compared with a test piece provided with a PTFE coating.
[Fig. 8] Fig. 8 shows still another example of results of the panel coking tests in the embodiment of the present invention, in which test pieces provided with silicone-based heat-resistant paints are compared with the examples of the embodiment.
[Fig. 9] Fig. 9 is a graph showing a result of a measurement by a TG-DTA analysis in the embodiment of the present invention.
[Fig. 10] Fig. 10 is a graph showing a result of a measurement by a TG-IR analysis in the embodiment of the present invention.
[Fig. 11] Fig. 11 is a diagram showing a configuration of a turbocharger in the embodiment of the present invention.

### [Description of Embodiments]

Several embodiments of the present invention will be described below with reference to the accompanying drawings. It is to be particularly noted that the drawings are not always illustrated to scale, and each dimensional relation between constituents is not limited only to the illustration.

As it has been mentioned already, the inventors of the present invention have arrived at the fact that a (nickel/nickel-phosphorus alloy)-PTFE composite coating has a property that it suppresses development of deposits in the range approximately from 300 to 450°C. The deposits are thought to be developed by adhesion of an oil onto a surface of a device and subsequent solidification thereof. The above-mentioned coating seems to be suitable for use for suppressing development of deposits in devices exposed to a high temperature in the range approximately from 300 to 450°C. As a result of earnest investigation, the inventors of the present invention have identified a lubricating oil line in a gas turbine as one of applicable devices.

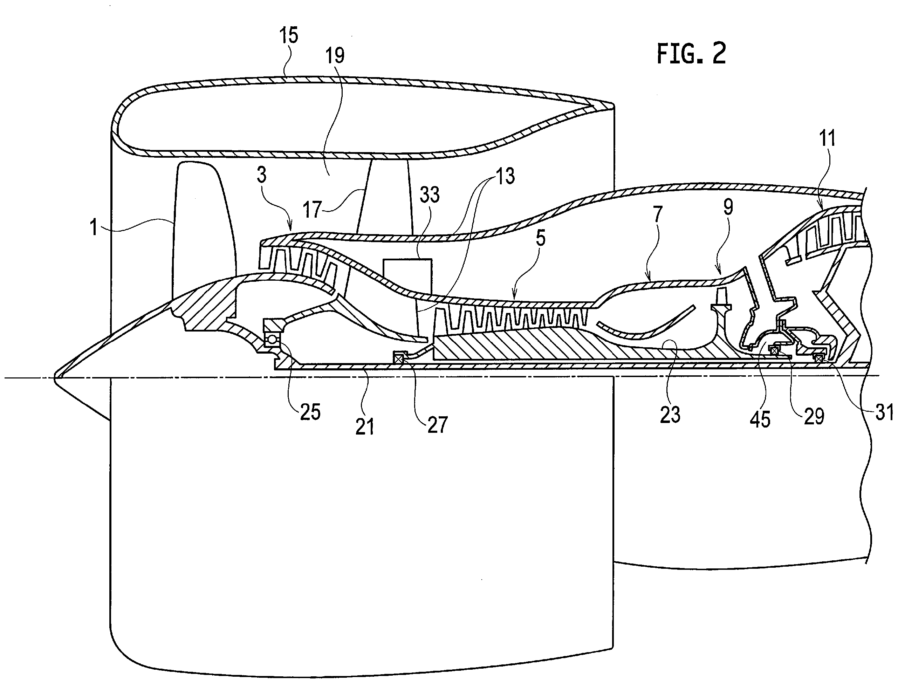

Referring to Fig. 2, a gas turbine includes a fan 1, a low-pressure compressor 3, a high-pressure compressor 5, a combustor 7, a high-pressure turbine 9, and a low-pressure turbine 11, for example, which are arranged in this order from its head to tail. A fuel is burned in the combustor 7 and a flow of a high-temperature gas toward the tail is thus generated. The high-pressure turbine 9 extracts part of energy therefrom and drives the high-pressure compressor 5, while the low-pressure turbine 11 extracts part of the remaining energy and drives the fan 1 and the low-pressure compressor 3.

The low-pressure turbine 11, the fan 1, and the low-pressure compressor 3 are connected to one another by using an inner drive shaft 21, which is rotatably supported by a stationary member 13 of the gas turbine through bearings 25 and 31. The high-pressure turbine 9 and the high-pressure compressor 5 are connected to each other by using an outer drive shaft 23, which is rotatably supported by the stationary member 13 likewise through bearings 27 and 29, and is located coaxially with the inner drive shaft 21.

The stationary member 13 may be fixed directly to a body, or may be fixed thereto through a guide vane 15 and a fan casing 17. A space between the fan casing 17 and a gas turbine body functions as a bypass duct 19. Part of a gas stream from the fan 1 toward the tail flows in this space while bypassing the gas turbine.

Moreover, the gas turbine includes an air-oil separator 33, which separates a lubricating oil from air flowing in a vent line. A publicly known centrifugal separator is applicable to the air-oil separator 33, for instance. Power for this separator can be extracted from the inner drive shaft 21 by use of a gear mechanism.

Respective structures for lubricating the bearings 25, 27, 29, and 31 have the same structure. This structure will be described below while taking the bearing 29 for supporting the outer drive shaft 23 as an example.

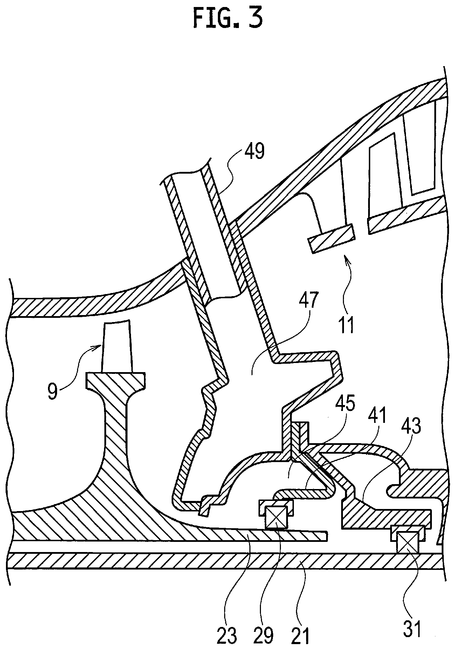

Referring to Fig. 3, the bearings 29 and 31 are supported, respectively, by frames 41 and 43 which are stationary members. The frame 41 and the bearing 29 are housed in a sump chamber 45. The bearing 29 is lubricated by being subjected to oil jet supply of the lubricating oil from a not-illustrated oil jet supply device. In the sump chamber 45, the lubricating oil is turned into a mist by means of high-speed rotation of the bearing 29. The lubricating oil thus turned into the mist adheres to a wall surface of the sump chamber 45, thereby forming a thin film thereon.

In the sump chamber 45, the lubricating oil is in the form of the mist, which easily dissipates away from the sump chamber 45. A labyrinth seal and the like can be used for preventing the dissipation. In addition, the dissipation of the lubricating oil from the sump chamber 45 is also prevented by increasing a pressure in a compression chamber 47 with compressed air. A vent line 49 is connected to the compression chamber 47 in order to release the pressure. The vent line 49 is further in fluid connection with the aforementioned air-oil separator 33, and is connected to a lubricating oil line via the air-oil separator 33. Meanwhile, besides the function to release the pressure, the vent line 49 also has a function to release the extra lubricating oil in order to inhibit the lubricating oil from flowing into other regions. For this reason, a flow path surface of the vent line 49 is exposed to the lubricating oil and to the air including the mist thereof.

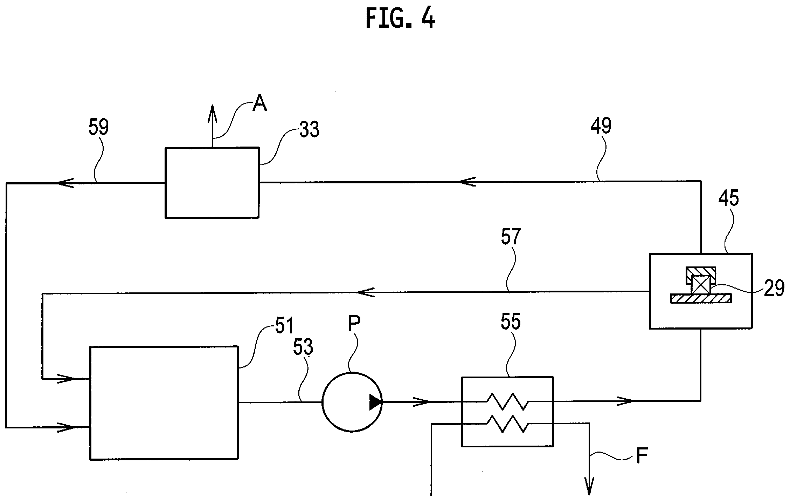

In the gas turbine, the lubricating oil is circulated in the lubricating oil line as shown in Fig. 4, for example. Although only one combination of the bearing and the sump chamber is illustrated in Fig. 4 for the convenience of explanation, the lubricating oil line is also connected to other bearings and other sump chambers.

Referring to Fig. 4, the lubricating oil line includes the following constituents as flow path components to allow passage of the lubricating oil, namely, the air-oil separator 33, the sump chamber 45, the vent line 49, a tank 51, a supply line 53, a pump P, a heat exchanger 55, a scavenging line 57, and a recovery line 59, for example. Usually, the sump chamber 45 is interposed between the heat exchanger 55 and the scavenging line 57, while the vent line 49 and the air-oil separator 33 are interposed between the sump chamber 45 and the recovery line 59.

The lubricating oil stored in the tank 51 is taken out through the supply line 53 by using the pump P, and is then supplied to the sump chamber 45 through the heat exchanger 55. In the heat exchanger 55, heat is exchanged between the lubricating oil and a fuel F, for example, whereby the temperature of the lubricating oil is adjusted and the fuel F is preheated at the same time.

The lubricating oil after having lubricated the bearing 29 in the sump chamber 45 is generally recovered into the tank 51 through the scavenging line 57. In the meantime, as mentioned previously, the lubricating oil in the form of the mist is also included in the compressed air which is taken out of the sump chamber 45 through the vent line 49. The compressed air including the mist of the lubricating oil is introduced into the air-oil separator 33, and is then separated into air A and the lubricating oil. The air A is discharged from the air-oil separator 33 to outside air, while the lubricating oil is recovered into the tank 51 through the recovery line 59.

The lubricating oil and the air including the mist thereof are heated in the process of lubricating the bearing 29 and have a temperature in a range from 350 to 400°C in a steady state, or may temporarily reach a temperature of about 450°C. The lubricating oil in this state holds a sufficiently high temperature for preheating the fuel F even at the point of being introduced into the heat exchanger 55 through the tank 51. In other words, the entire lubricating oil line has the high temperature, so that there is a risk of development of deposits and adhesion of the deposits to the inside thereof. A coating of this embodiment is suitable for suppressing the adhesion of deposits by covering an inner surface of the lubricating oil line. In other words, the coating of this embodiment is suitable for suppressing the adhesion of deposits by covering a surface of a flow path component that allows passage of the lubricating oil, the surface being exposed to the temperature in the range approximately from 300 to 450°C and coming into contact with the lubricating oil.

In particular, the lubricating oil is turned into the mist and mixed with the air in a section from the sump chamber to the air-oil separator via the vent line. This section is therefore an extremely oxidative environment and is prone to develop deposits. In this regard, the coating of this embodiment for the purpose of suppressing the development of deposits may be employed.

Specifically, the flow path component applying the coating of this embodiment may be at least one selected from the group consisting of the sump chamber configured to lubricate the bearing with the lubricating oil, and the vent line connected to the sump chamber and configured to release the lubricate oil. Alternatively, the coating of this embodiment may cover only surfaces in the sump chamber and the vent line, which are exposed to the temperature in the range from 300 to 450°C and come into contact with the lubricating oil.

The temperature of a wall surface of the sump chamber which comes into contact with the lubricating oil and the high-temperature air including the mist thereof, and the temperature of a flow path surface of the vent line are likely to reach the temperature in the range approximately from 300 to 450°C. The mist of the lubricating oil adheres to the wall surface of the sump chamber and forms a thin film thereon. Accordingly, the wall surface is more likely to develop deposits. Since the adhesion of deposits can be suppressed by covering the wall surface of the sump chamber with the coating of this embodiment, it is possible to prevent the lubrication of the bearing from being inhibited. In the meantime, the vent line has the function to release the pressure and to release the extra lubricating oil. Accordingly, the flow path surf ace of the vent line is more likely to develop deposits. Since the adhesion of deposits can be suppressed by covering the flow path surface of the vent line with the coating of this embodiment, it is possible to prevent the flow path from being clogged.

Meanwhile, an environment similar to the above-mentioned one is also found in a turbocharger. Specifically, in several types of turbochargers, a lubricating oil line for circulating a lubricating oil is provided for the purpose of lubricating a bearing to support a shaft of a turbocharger, and the bearing is housed in an oil reservoir provided on the lubricating oil line. The lubricating oil line or the oil reservoir in particular reaches a temperature in a range approximately from 300 to 450°C, and is therefore suitable for application of the coating of this embodiment.

This embodiment is based on the finding of the fact that the (nickel/nickel-phosphorus alloy)-PTFE composite coating has the property that it suppresses the development of deposits in the range approximately from 300 to 450°C. Based on the finding of this property, it is also found out that the coating is suitable for use in the above-mentioned applications. The flow path component of the gas turbine or the turbocharger to allow passage of the lubricating oil includes the coating, which covers the surface being exposed to the temperature in the range approximately from 300 to 450°C and coming into contact with the lubricating oil, and includes any of nickel and a nickel-phosphorus alloy, and particles made of polytetrafluoroethylene. It is to be noted, however, that the use in the lubricating oil line of the gas turbine or the turbocharger merely represents an example of applications, and this embodiment is also applicable to any machine equipment to be exposed to oil such as the lubricating oil at the temperature in the range approximately from 300 to 450°C.

It is to be also noted that the above-mentioned coating is intended to cover the inner surface of the lubricating oil line including the sump chamber and the vent line for the purpose of suppressing deposits, and is not intended to cover bearings or races for the purpose of lubrication or reduction of friction. The inner surface of the lubricating oil line is generally not subjected to friction.

The coating of this embodiment includes any of nickel and the nickel-phosphorus alloy, and the particles made of polytetrafluoroethylene. Moreover, the coating of this embodiment may be made of any of nickel and the nickel-phosphorus alloy, and the particles made of polytetrafluoroethylene (PTFE). Nickel or the nickel-phosphorus alloy includes nickel and therefore has a function mainly to inhibit production of an oxide (sludge) or a carbide while suppressing a carbonization reaction of an oil content contained in the lubricating oil.

The particles made of polytetrafluoroethylene (PTFE) have a function mainly to suppress adhesion of the lubricating oil while increasing oil repellency. When the coating has low oil repellency (good wettablility, or a small contact angle), an amount of adhesion of the lubricating oil is increased as a consequence of the lubricating oil spreading widely on the surface of the coating, and an amount of production of the oxide (sludge) or the carbide is increased accordingly. On the other hand, when the coating has high oil repellency (bad wettablility, or a large contact angle), the amount of adhesion of the lubricating oil is reduced as a consequence of the lubricating oil hardly spreading widely on the surface of the coating, whereby the amount of production of the oxide (sludge) or the carbide is reduced accordingly.

As described above, according to the coating of this embodiment, the development of deposits can be suppressed by reducing the deposition amount of the lubricating oil while increasing the oil repellency of the surface of the coating, and by suppressing the carbonization reaction of the oil content contained in the lubricating oil adhering to the surface of the coating. Meanwhile, as shown in thermal analysis evaluation of the coating of this embodiment to be described later, the coating of this embodiment barely causes a change in quality of its coating structure in the temperature range approximately from 300 to 450°C, and the coating is retained by nickel or the nickel-phosphorus alloy even when polytetrafluoroethylene (PTFE) included in the coating is softened. Hence, the coating is applicable in the temperature range approximately from 300 to 450°C. A film thickness of the coating can be set in a range from 5 µm to 20 µm, for example. Publicly known techniques are applicable to formation of this coating. For instance, electroless composite plating can be used. Procedures according o the electroless composite plating are as follows.

Flow path components constituting target lubricating oil line components are subjected to appropriate degreasing and pickling in advance. Here, surfaces other than target surfaces may be sealed by means of masking and the like so as not to plate on locations other than the target surfaces.

A plating solution is a publicly known plating solution used for electroless nickel plating, which is an aqueous solution containing hypophosphorous acid and either nickel sulfate or nickel chloride.

The particles made of PTFE are prepared in advance, and a grain size of the particles is equal to or below 1 µm or may be in a range from 0.2 to 0.5 µm. Shapes of the particles are either spherical or approximately spherical. The particles are suspended in a surfactant, thereby forming a colloid.

Note that such a PTFE colloidal liquid as well as the plating solution can adopt commercially available products, respectively.

The PTFE colloidal liquid is mixed with the plating solution. A mixing ratio of the mixed liquid governs a composition ratio of PTFE and any of nickel and the nickel-phosphorus alloy in the coating. The mixing ratio is adjusted in accordance with a targeted composition ratio.

The mixed liquid is kept at a temperature in a range from 85 to 88°C in a plating tank, for example. As for heating, a method that can avoid local heating to prevent the particles from a change in quality or condensation may be employed. A steam heater is an example of the method. In the meantime, a plating bath is very gently stirred with a stirring rod so as to prompt the PTFE particles to evenly reach a plated surface.

The targeted flow path components are immersed in the temperature-controlled mixed liquid. These flow path components are formed from alloys containing iron group elements (for example, an iron-containing aluminum alloy and an iron alloy such as stainless steel). Such an alloy behaves as a catalyst and promotes dehydration of hypophosphorous acid. Hydrogen thus produced reduces nickel ions and thus achieves nickel plating. Hypophosphorus acid is also reduced to produce phosphorus. Usually, this phosphorus forms an alloy with nickel, but this reaction itself is not the subject in the present invention. The plating may be conducted as plating of elemental nickel or as plating of any of alloys with other elements.

The PTFE particles are trapped in the plated nickel, whereby the (nickel/nickel-phosphorus alloy)-PTFE composite coating is formed on each flow path component. While a volume ratio of the PTFE particles in the coating depends on the mixing ratio of the PTFE colloidal liquid in the plating solution, this volume ratio may be set not to exceed 50% by volume. In other words, nickel or the nickel-phosphorus alloy constitutes a matrix and the PTFE particles are dispersed therein.

The coating may include the PTFE particles at a volume ratio in the coating larger than 0% by volume and equal to or smaller than 40% by volume, and any of nickel and the nickel-phosphorus alloy for the rest. The volume ratio of the PTFE particles in the coating is set larger than 0% by volume in order to improve the oil repellency by causing the coating to include the PTFE particles. The volume ratio of the PTFE particles in the coating is set equal to or smaller than 40% by volume because the content of nickel is relatively reduced if the volume ratio exceeds 40% by volume, and a reaction suppressing effect on the carbonization reaction of the oil content contained in the lubricating oil is significantly deteriorated, and the effect of suppressing the deposits may become less than that of a silicone-based heat-resistant paint and the like.

The coating may include the PTFE particles at a volume ratio in the coating equal to or larger than 10% by volume and equal to or smaller than 40% by volume, and any of nickel and the nickel-phosphorus alloy for the rest. The volume ratio of the PTFE particles in the coating is set equal to or larger than 10% by volume because the oil repellency is significantly increased in this way. On the other hand, if the volume ratio of the PTFE particles in the coating is smaller than 10% by volume, the oil repellency may be deteriorated and the effect of suppressing the deposits may become less than that of the silicone-based heat-resistant paint and the like.

The coating may include the PTFE particles at a volume ratio in the coating equal to or larger than 30% by volume and equal to or smaller than 35% by volume, and any of nickel and the nickel-phosphorus alloy for the rest. The volume ratio of the PTFE particles in the coating is set equal to or larger than 30% by volume because the oil repellency can be further increased in this way. Meanwhile, the volume ratio of the PTFE particles in the coating is set equal to or smaller than 35% by volume because the reaction suppressing effect on the carbonization reaction can be further increased in this way. Here, the coating may also include a small amount of inevitable impurities.

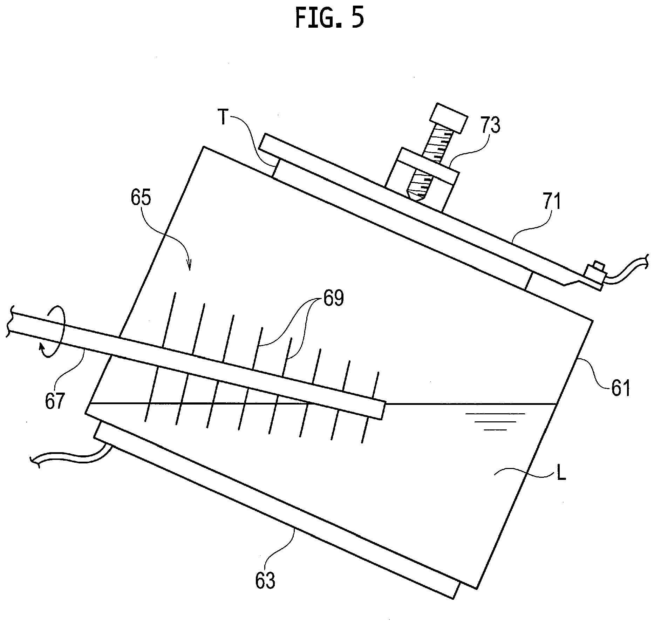

Comparison by means of a panel coking test was conducted for the purpose of verifying the effect of the coating of this embodiment. As explained in NPL 4, for example, the panel coking test is a test which is widely known in the technical field for evaluating cleanliness of the lubricating oil, and this test uses an apparatus illustrated in Fig. 5.

Referring to Fig. 5, a panel coking test apparatus includes an obliquely tilted rectangular parallelepiped tank 61. A sample oil L is appropriately stored in the tank 61. The air is filled in a space above an oil surface of the sample oil L in the tank 61. A heater 63 is installed, for example, on a lower surface of the tank 61 so as to heat the sample oil L.

A splasher 65 for splashing the sample oil L is inserted into the tank 61. A shaft 67 of the splasher 65 is led out of the tank 61, so that the splasher 65 can be rotated by driving the shaft 67. Multiple wires 69 projecting radially from the shaft 67 are dipped halfway in the sample oil L. Thus, the wires 69 are configured to splash the sample oil serially onto a test piece T along with the rotation of the splasher 65.

The test piece T is disposed so as to cover an upper surface of the tank 61. The test piece T can be fixed together with a heater 71 to the tank 61 by using a clamp 73. In addition, temperature measurement devices such as thermocouples are disposed in the sample oil L and in close contact with the test piece T, respectively.

The panel coking tests have been conducted by using the following test pieces, namely, an aluminum plate without a coating as a comparative material, one provided with a nickel-phosphorus alloy-PTFE composite-plated coating including 10-15% by volume of PTFE as Example 1, one including 30-35% by volume of PTFE as Example 2, and one including 40% by volume of PTFE as Example 3.

Regarding each of the coatings of Examples 1 to 3, the nickel-phosphorus alloy-PTFE composite-plated coating was formed by the electroless composite plating. Meanwhile, each of the coatings of Examples 1 to 3 was coated on an aluminum plate (which contains iron). The coating of Example 1 includes the PTFE particles at the volume ratio in the coating in the range from 10% by volume to 15% by volume, and the nickel-phosphorus alloy for the rest. The coating of Example 2 includes the PTFE particles at the volume ratio in the coating in the range from 30% by volume to 35% by volume, and the nickel-phosphorus alloy for the rest. The coating of Example 3 includes the PTFE particles at the volume ratio in the coating equal to 40% by volume, and the nickel-phosphorus alloy for the rest.

The sample oil L was heated to 100°C with the heater 63 while each test piece was heated to 350°C with the heater 71, and the sample oil was splashed on the test piece by the rotation of the splasher 65. The rotation of the splasher 65 was intermittent, and a cycle of splashing droplets of the sample oil on the test piece for 15 seconds and then stopping the splash for 45 seconds was repeated. The sample oil was ester oil and each test time took 6 hours. After each test, the test piece was taken out. Then, external appearance of the test piece was observed and a mass of deposits adhering thereto was measured.

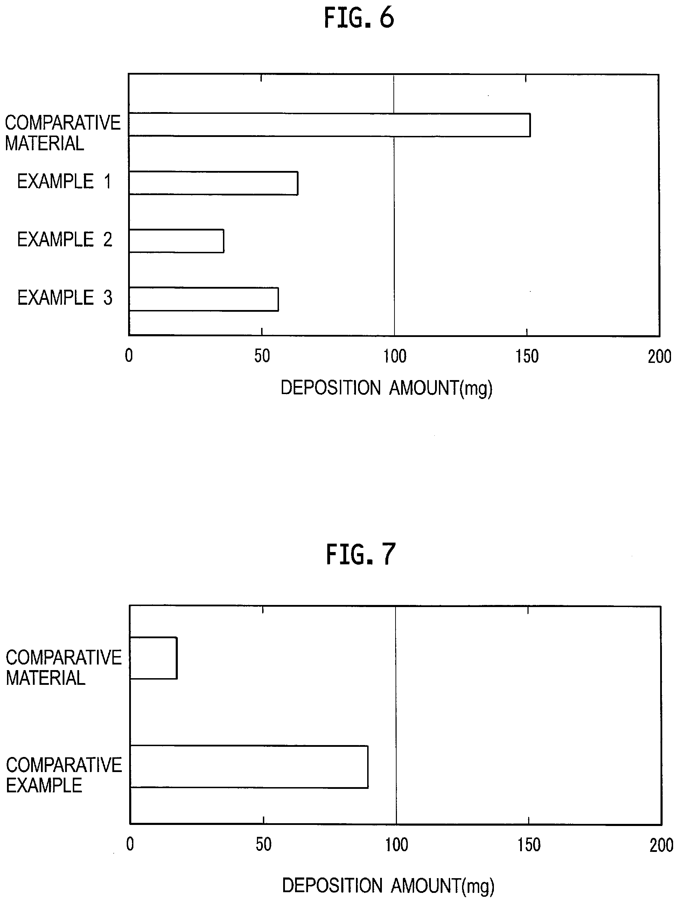

The deposits were found on the entire inner surface of every test piece. Fig. 6 shows test results, in which the horizontal axis indicates the mass of the deposits. The deposits in excess of 150 mg adhered to the comparative material without the coating. In contrast, the amount of the deposits was less than half in each of Examples 1 to 3. In other words, the coatings of this embodiment have a significant effect of suppressing the development of deposits.

It is made clear that the coatings of Examples 1 to 3 are provided with the oil repellency and the reaction suppressing effect on the carbonization reaction, and have the significant effect of suppressing the development of deposits. In the meantime, it also turns out that the coating of Example 2 has the most significant effect of suppressing the development of deposits among the coatings of Examples 1 to 3, because the deposition amount of deposits was the lowest in the case of the coating of Example 2.

Based on a relation of the deposition amounts of deposits on the coatings of Examples 1 and 2, it is made clear that the oil repellency of the coating is deteriorated and the deposition amount of deposits is increased accordingly when the volume ratio of PTFE falls below the range from 30-35% by volume, whereby the effect of suppressing the development of deposits is deteriorated.

Furthermore, based on a relation of the deposition amounts of deposits on the coatings of Examples 2 and 3, it is made clear that the volume ratio of the nickel-phosphorus alloy becomes relatively smaller when the volume ratio of PTFE exceeds the range from 30-35% by volume, whereby the effect of suppressing the development of deposits is deteriorated due to a deterioration in the reaction suppressing effect on the carbonization reaction on the coating.

Meanwhile, as a comparative example, a test piece provided with a coating consisting of PTFE was also subjected to the panel coking test. A sample oil used in this example is commercially available under a product name of TEXACO 5W30, which has been put to use for a predetermined period. The sample oil was heated to 100°C while the test piece was heated to 230°C, respectively, and a test period was set to 24 hours. Fig. 7 shows a result of the test. As compared to the comparative material without a coating, a larger amount of deposits adhered in the case of the comparative example provided with the PTFE coating.

Next, as reference examples, test pieces provided with silicone-based heat-resistant paints were also subjected to the panel coking tests. Two types of the silicone-based heat-resistant paints were evaluated. A silicone-based heat-resistant paint prepared by adding aluminum powder as pigment to silicone resin was used in Reference Example 1. A silicone-based heat-resistant paint prepared by adding aluminum powder, nickel powder, and cobalt power as pigment to silicone resin was used in Reference Example 2. Each of the coatings of Reference Examples 1 and 2 was formed by applying the corresponding silicone-based heat-resistant paint to an aluminum plate, and then baking the coating at 400°C for 2 hours. Note that test conditions for the panel coking tests are the same as the test conditions for the coatings of Examples 1 to 3 mentioned above.

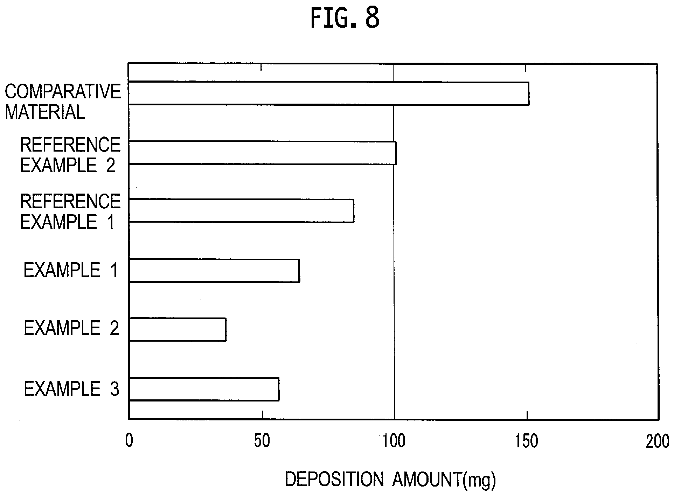

In Fig. 8, the coatings of Reference Examples 1 and 2 are compared with the coatings of Examples 1 to 3 of this embodiment. The deposition amounts of deposits to the coatings of Reference Examples 1 and 2 were larger than those to the coatings of Examples 1 to 3. From these results, it was confirmed that the coatings of Examples 1 to 3 have higher effects of suppressing deposits than those of the coatings formed from the silicone-based heat-resistant paints. In other words, the coating including the PTFE particles at the volume ratio in the coating equal to or larger than 10% by volume and equal to or smaller than 40% by volume, and any of nickel and the nickel-phosphorus alloy for the rest, turns out to exert a higher effect of suppressing deposits than the coating made of the silicone-based heat-resistant paint does.

From the above-mentioned test results, it turns out that the volume ratio of the PTFE particles in the coating may be larger than 0% by volume and equal to or smaller than 40% by volume, the volume ratio of the PTFE particles in the coating may be equal to or larger than 10% by volume and equal to or smaller than 40% by volume, or the volume ratio of the PTFE particles in the coating may be equal to or larger than 30% by volume and equal to or smaller than 35% by volume.

Next, thermal analyses were performed on the coating of Example 2 before undergoing the panel coking test. Here, a thermogravimetric-differential thermal analysis (a TG-DTA analysis) and a thermogravimetric-infrared spectrometric analysis (a TG-IR analysis) were conducted as the thermal analyses. The TG-IR was performed simultaneously with the TG-DTA analysis and an exhaust gas was measured therein. In these analyses, measurements were conducted in the atmosphere while increasing the temperature at a constant rate of temperature increase from a room temperature up to 900°C.

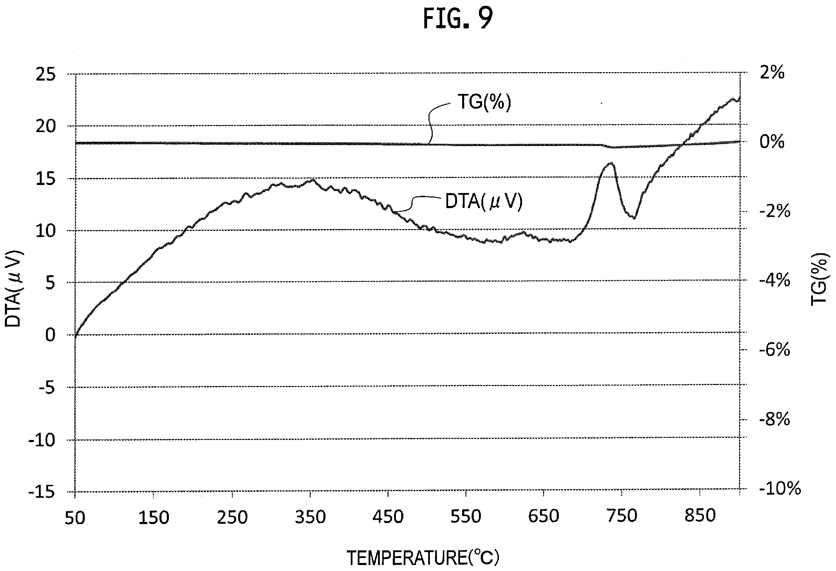

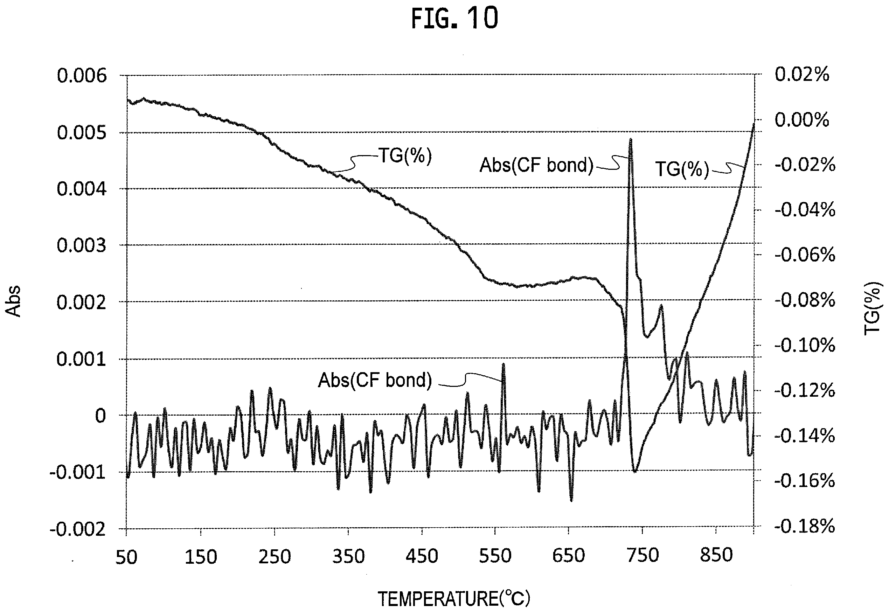

Fig. 9 is a graph showing a result of the measurement by the TG-DTA analysis. Fig. 10 is a graph showing a result of the measurement by the TG-IR analysis. A DTA curve indicated in Fig. 9 shows development of an exothermic reaction approximately from 650°C on, and a large exothermic peak is observed in a range approximately from 700 to 750°C. In a TG curve indicated in Fig. 9, a slight decrease in weight along with the development of the exothermic reaction is observed in the range approximately from 700 to 750°C. In an IR curve indicated with Abs (CF bond) in Fig. 10, a large peak is observed in the range approximately from 700 to 750°C. Here, C-F bonds are increased in components of the exhaust gas emitted in the temperature range where the exothermic reaction develops. Accordingly, the decrease in weight is thought to be attributed to a change in quality, such as thermal decomposition, of PTFE included in the coating.

From this result, it turns out that the coating of this embodiment hardly causes a change in quality of the coating structure at a temperature equal to or below 600°C, and that PTFE included in the coating of this embodiment hardly causes the thermal decomposition and the like at that temperature. Thus, it is confirmed that the coating of this embodiment is applicable in the range approximately from 300 to 450°C.

The coating of this embodiment can suppress the development of deposits by suppressing the carbonization reaction of the oil content contained in the lubricant by use of either elemental nickel or nickel contained in the nickel-phosphorus alloy, and suppressing adhesion of the lubricating oil while increasing the oil repellency with the PTFE particles. Accordingly, it is obvious that this coating is suitable for use for suppressing the development of deposits in the flow path component and for suppressing the adhesion thereof, by covering the surface in the flow path component in the gas turbine or the turbocharger, the surface being exposed to the temperature in the range approximately from 300 to 450°C and coming into contact with the lubricating oil. Moreover, it is also obvious that this coating can suppress development and adhesion of deposits to the device being exposed to and coming into contact with the lubricating oil at the temperature in the range approximately from 300 to 450°C, by covering the surface coming into contact with the lubricating oil with this coating.

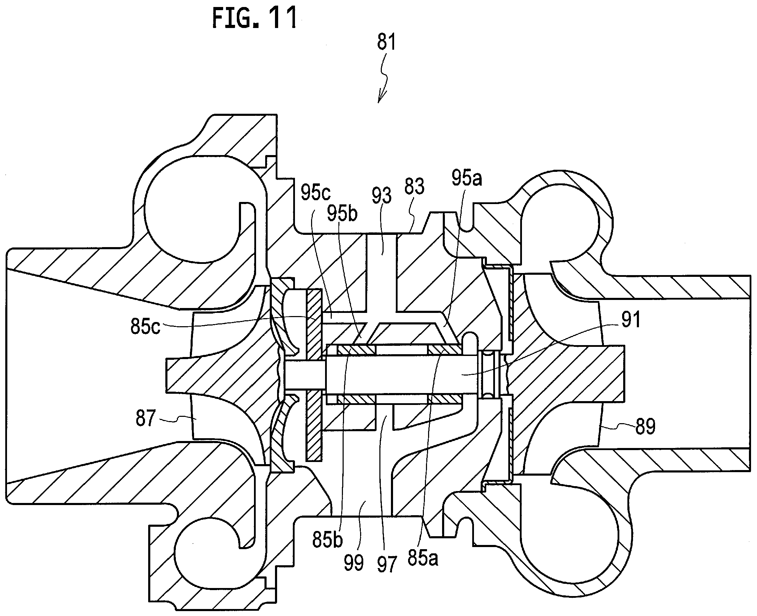

Next, a description will be given of a flow path component of a turbocharger for a vehicle (such as an automobile) applying the coating of this embodiment. Fig. 11 is a diagram showing a configuration of a turbocharger 81. Regarding the turbocharger 81 shown in Fig. 11, a compressor side is illustrated on the left side and a turbine side is illustrated on the right side.

The turbocharger 81 includes a bearing housing 83. In the bearing housing 83, there are disposed multiple bearings 85a, 85b, and 85c, and a shaft (a rotor shaft) 91 which is supported by the bearings 85a, 85b, and 85c and integrally connects a compressor wheel 87 and a turbine impeller 89. Further, the bearing housing 83 includes a lubricating oil path structure, which is configured to supply the lubricating oil to regions where the bearings 85a, 85b, and 85c come into sliding contact with the shaft (the rotor shaft) 91, and to discharge the lubricating oil after used for the lubrication to the outside of the bearing housing 83. As described above, the bearing housing 83 has a function as the flow path component which allows passage of the lubricating oil.

The lubricating oil path structure includes an oil supply port 93 for taking in the lubricating oil, and oil supply paths 95a, 95b, and 95c connecting with the oil supply port 93 and configured to supply the lubricating oil to the bearings 85a, 85b, and 85c. Moreover, the lubricating oil path structure includes an oil discharge path 97 for discharging the lubricating oil that has lubricated the bearings 85a, 85b, and 85c, and an oil discharge port 99 provided in such a way as to connect with the oil discharge path 97 and configured to discharge the lubricating oil after used for the lubrication to the outside of the bearing housing 83. Here, the lubricating oil discharged from the oil discharge port 99 is taken in again from the oil supply port 93 by use of a not-illustrated lubricating oil pump. As described above, in order to lubricate the bearings 85a, 85b, and 85c that support the shaft (the rotor shaft) 91, the turbocharger 81 is provided with a lubricating oil line which feeds and circulates the lubricating oil.

The oil supply paths 95a, 95b, and 95c are exposed to the lubricating oil supplied from the oil supply port 93, and to the air including the mist of the lubricating oil for lubricating the bearings 85a, 85b, and 85c. In addition, since the oil supply paths 95a, 95b, and 95c are formed near the bearings 85a, 85b, and 85c, surfaces of the oil supply paths 95a, 95b, and 9 coming into contact with the lubricating oil reach a temperature in the range approximately from 300 to 450°C due to heat generation of the bearings 85a, 85b, and 85c and the like. Accordingly, the oil supply paths 95a, 95b, and 95c are in a high-temperature and oxidative environment.

The surfaces of the oil supply paths 95a, 95b, and 95c exposed to the temperature in the range approximately from 300 to 450°C and coming into contact with the lubricating oil are covered with the coating of this embodiment. Thus, the adhesion of deposits to inner surfaces of oil supply paths 95a, 95b, and 95c can be suppressed. This makes it possible to supply the lubricating oil to the bearings 85a, 85b, and 85c while preventing oil path clogging of the oil supply paths 95a, 95b, and 95c due to the deposits.

The bearing housing has been described as the flow path component in the turbocharger for a vehicle (such as an automobile) applying the coating of this embodiment. However, the present invention is not limited to the forgoing. The present invention is also applicable to flow path components and the like, such as one on the turbine side to allow passage of the lubricating oil, because such a flow path component on the turbine side to which an exhaust gas is supplied from an engine reaches a temperature in the range approximately from 300 to 450°C, and is prone to develop deposits on a surface coming into contact with the lubricating oil included in the exhaust gas.

Although the present invention has been described with reference to a embodiment, it is to be understood that the present invention is not limited to the above-described embodiment. Based on the contents of this disclosure, a person with ordinary skill in the art can embody the present invention by modifying or altering the embodiment.

### [Industrial Applicability]

The present invention provides a coating capable of inhibiting deposits, which are derived from a lubricating oil in a range approximately from 300 to 450 °C, from being developed in a flow path component of a lubricating oil line of a gas turbine for aircraft, a turbocharger for a vehicle (such as an automobile) and the like, or from adhering thereto.

## Claims

1. A coating to cover a surface of a device, the device being exposed to and coming into contact with a lubricating oil in a range approximately from 300 to 450°C, comprising:
any of nickel and a nickel-phosphorus alloy; and
particles made of polytetrafluoroethylene.

2. The coating according to claim 1, wherein the coating includes:
the particles made of polytetrafluoroethylene at a volume ratio in the coating larger than 0% by volume and equal to or smaller than 40% by volume; and
any of the nickel and the nickel-phosphorus alloy for the rest.

3. The coating according to claim 2, wherein the coating includes:
the particles made of polytetrafluoroethylene at a volume ratio in the coating equal to or larger than 10% by volume and equal to or smaller than 40% by volume; and
any of the nickel and the nickel-phosphorus alloy for the rest.

4. A flow path component with a coating, comprising:
a flow path component to be used in any of a gas turbine and a turbocharger, and to allow passage of a lubricating oil; and
a coating to cover a surface of the flow path component, the surface being exposed to and coming into contact with the lubricating oil in a range approximately from 300 to 450°C, the coating including
any of nickel and a nickel-phosphorus alloy, and
particles made of polytetrafluoroethylene.

5. The flow path component with a coating according to claim 4, wherein the coating includes:
the particles made of polytetrafluoroethylene at a volume ratio in the coating larger than 0% by volume and equal to or smaller than 40% by volume; and
any of the nickel and the nickel-phosphorus alloy for the rest.

6. The flow path component with a coating according to claim 5, wherein the coating includes:
the particles made of polytetrafluoroethylene at a volume ratio in the coating equal to or larger than 10% by volume and equal to or smaller than 40% by volume; and
any of the nickel and the nickel-phosphorus alloy for the rest.

7. The flow path component with a coating according to any one of claims 4 to 6, wherein
the flow path component is at least one selected from the group consisting of
a sump chamber used in the gas turbine and configured to lubricate a bearing with the lubricating oil, and
a vent line connected to the sump chamber and configured to release the lubricate oil.

8. The flow path component with a coating according to any one of claims 4 to 6, wherein
the flow path component includes
a sump chamber used in the gas turbine and configured to lubricate a bearing with the lubricating oil, and
a vent line connected to the sump chamber and configured to release the lubricate oil, and
the coating covers only the surface of each of the sump chamber and the vent line.

9. The flow path component with a coating according to any one of claims 4 to 6, wherein
the flow path component is a bearing housing used in the turbocharger and including an oil supply path to supply the lubricating oil to a bearing, and
the coating covers the surface of the oil supply path.
